# FASCICULE DE BREVET EUROPEEN

(11) **EP 3 107 221 B1**
(45) Date de publication et mention de la délivrance du brevet: **01.08.2018**
(21) Numéro de dépôt: 16174731.6
(22) Date de dépôt: 16.06.2016
(51) Int. Cl.: H04B 7/185, H04B 7/204

(54) **SATELLITE DE TÉLÉCOMMUNICATION MULTIFAISCEAUX DANS LEQUEL, SUR LA LIAISON ENTRE LE SATELLITE ET UNE STATION D'ANCRAGE, UNE SEULE FRÉQUENCE EST ASSOCIÉE À UN TERMINAL MOBILE QUEL QUE SOIT LE PINCEAU D'ANTENNE DANS LEQUEL LE TERMINAL SE TROUVE.**
MEHRSTRAHL KOMMUNIKATIONSSATELLIT AUF DEM DIE VERBINDUNG ZWISCHEN DEM SATELLITEN UND EINER SCHNITTSTELLESTATION EINE EINIGE FREQUENZ EINEM MOBILEN ENDGERÄT ZUGEWIESEN WIRD, UNABHÄNGIG VON DEM STRAHL AUF DEM DAS ENDGERÄT SICH BEFINDET.
MULTIBEAM COMMUNICATION SATELLITE ON WHICH, ON THE LINK BETWEEN THE SATELLITE AND A GATEWAY STATION, A UNIQUE FREQUENCY IS ALLOCATED TO A MOBILE TERMINAL INDEPENDENTLY OF THE BEAM ON WHICH THE TERMINAL IS LOCATED.

(30) Priorité: 19.06.2015 FR 1501278
(43) Date de publication de la demande: 21.12.2016
(73) Titulaire: Thales, 92400 Courbevoie (FR)
(72) Inventeur: CORBEL, Erwan, 31100 Toulouse (FR); LARUE DE TOURNEMINE, Cécile, 31100 Toulouse (FR); ROGER, Bruno, 31100 Toulouse (FR); TAYRAC, Pierre, 31100 Toulouse (FR)
(74) Mandataire: Brunelli, Gérald

(56) Documents cités:
- WO-A1-01/01606
- US-A- 5 736 959
- US-A1- 2005 288 011
- US-B1- 6 317 583

## Description

La présente invention concerne le domaine des télécommunications par satellite multifaisceaux. La présente invention concerne plus particulièrement un satellite de télécommunication multifaisceaux, un système de télécommunication associé et un procédé de transfert intercellulaire dans un système de télécommunication multifaisceaux.

Actuellement, pour les utilisateurs mobiles des systèmes de télécommunication multifaisceaux, afin de garantir le suivi des communications établies et ce, sans interruption de service, ces systèmes réservent, pour chaque terminal utilisateur, une bande passante dédiée pour chacun des chemins possibles entre le spot utilisateur et la station d'ancrage. Ceci conduit à réserver une bande passante très supérieure à celle effectivement utilisée.

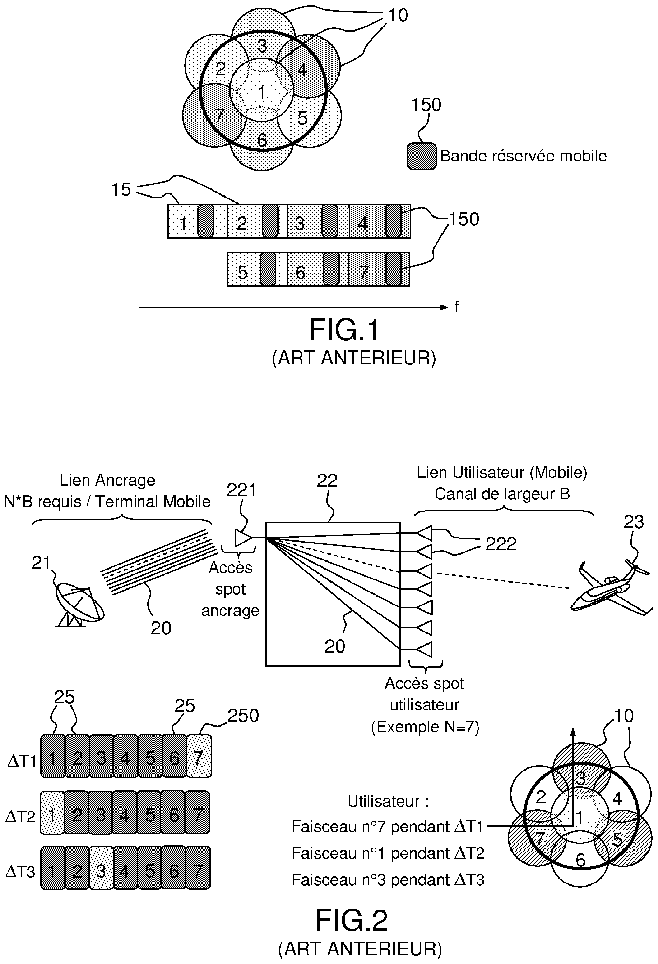

A titre d'exemple la figure 2 représente un système de télécommunication connu de l'art antérieur. Ce système comprend une station d'ancrage 21 et un satellite de télécommunication multifaisceaux 22. Le système est configuré pour permettre à des terminaux utilisateurs 23 fixes et/ou mobiles de communiquer.

Pour le lien utilisateurs, c'est à dire pour la liaison entre un terminal utilisateur 23 et le satellite de communication 22, les systèmes de télécommunication multifaisceaux proposent classiquement des plans de fréquence à M couleurs 15 (avec M un entier strictement supérieur à 1), sans recouvrement entre couleurs.

En référence à la figure 1, on rappelle que les plans de fréquence à M couleurs font correspondre une couleur 15 à chacun des faisceaux 10 formés par le satellite 22, une couleur 15 correspondant à une bande de fréquence et une polarisation, de telle sorte que les faisceaux 10 d'une même couleur soient non adjacents. Les faisceaux 10 contiguës correspondent donc à des couleurs différentes. Pour un plan de fréquence à M couleurs 15, M sous-bandes 150, ou canaux, sont donc réservées sur le lien utilisateur pour couvrir les différents cas de position du terminal utilisateur mobile, comme illustré figure 2 pour le cas particulier d'un plan de fréquence à quatre couleurs 15.

A chaque instant une seule des bandes réservées 150 est utilisée coté utilisateur. Cette solution ne permet pas d'optimiser la bande réservée aux communications mobiles sur le lien utilisateurs. De plus, ces canaux 150 sont situés sur des bandes de fréquence 15 disjointes, ce qui fait que le modem du terminal utilisateur 23 doit être reconfiguré à chaque fois que l'utilisateur mobile change de faisceau 10 ce qui a pour conséquence de complexifier le processus de transfert intercellulaire (ou «*handover*» selon la terminologie anglo saxonne).

En référence à la figure 2, le satellite 22 comprend une charge utile configurée pour transmettre des signaux hyperfréquences entre la station d'ancrage 21 et au moins un terminal utilisateur 23. La charge utile du satellite 22 comprend un accès spot ancrage 221 et une pluralité d'accès spot utilisateur 222. L'accès spot ancrage 221 est configuré pour recevoir et transmettre des signaux hyperfréquences en provenance et à destination de la station d'ancrage 21. De même, les accès spot utilisateur 222 sont configurés pour recevoir et transmettre des signaux hyperfréquences.

Dans les charges utiles actuelles la configuration des routes 20 utilisées par les liaisons entre chaque accès spot utilisateur 222 et l'accès spot ancrage 221 est fixe ou planifiée. Par exemple, la première route 20 est associée avec la première liaison reliant l'accès spot ancrage 221 et le premier d'accès spot utilisateur 222. Par convention, on considérera, sur la figure 2, l'accès spot utilisateur situé le plus haut comme étant le premier accès spot utilisateur et celui situé le plus bas comme étant le dernier. La deuxième route 20 est associée avec la deuxième liaison reliant l'accès spot ancrage 221 et le deuxième d'accès spot utilisateur 222 et ainsi de suite. De ce fait, pour assurer les communications entre la station d'ancrage 21 et chacun des faisceaux 10 de la couverture du satellite 22, il faut réserver autant de routes 20 entre la station d'ancrage 21 et l'accès spot ancrage 221 que de positions possibles du terminal mobile utilisateur 23 à l'intérieur des faisceaux 10 formés par le satellite 22. Cela se traduit par une réservation d'autant de routes 20 et donc autant de sous bandes de fréquences 25, ou canaux mobiles, que de faisceaux 10 assurant la couverture. Cette solution n'est pas optimale car à chaque instant, seule une bande de fréquence 250 coté station d'ancrage 21 est utilisée, et donc seulement une fraction de la bande de fréquence réservée est utilisée. Voir US 5 736 959 A (Patterson David Palmer (US) et al.).

Un but de l'invention est notamment de corriger tout ou partie des inconvénients de l'art antérieur en proposant une solution permettant de d'optimiser la gestion de la mobilité des terminaux utilisateur au sein d'un système de télécommunication multifaisceaux.

A cet effet, l'invention a pour objet un satellite de télécommunication multifaisceaux, comprenant une charge utile reconfigurable, au moins un accès spot ancrage et une pluralité d'accès spot utilisateur, ladite charge utile étant configurée pour transmettre des signaux hyperfréquences entre au moins une station d'ancrage et au moins un terminal utilisateur via ledit accès spot ancrage et lesdits accès spots utilisateurs, ledit accès spot ancrage étant apte à recevoir et/ou à transmettre des signaux hyperfréquences en provenance et/ou à destination d'au moins une station d'ancrage, lesdits accès spot utilisateur étant aptes à recevoir et/ou transmettre des signaux hyperfréquences en provenance et/ou à destination d'au moins un terminal utilisateur en formant des faisceaux,
ledit satellite étant caractérisé en ce que, pour un terminal utilisateur mobile donné, ledit accès spot ancrage est associé à un canal fréquentiel unique pour la liaison entre le satellite et une station d'ancrage et lesdits accès spot utilisateur sont chacun associés à un canal fréquentiel pour la liaison entre le satellite et ledit terminal utilisateur mobile,
et en ce que, la charge utile comprend au moins un module de routage configuré pour router de façon dynamique, l'accès spot utilisateur associé au faisceau dans lequel se trouve ledit terminal utilisateur mobile à l'accès spot ancrage associé à la station d'ancrage et inversement en fonction de la position du terminal utilisateur mobile et un module de transposition configuré pour transposer en fréquence les signaux hyperfréquences provenant des accès spot utilisateur vers la fréquence associé au canal fréquentiel de l'accès spot ancrage et inversement, la transposition des signaux issus des accès spots utilisateur, pour un terminal utilisateur mobile donné se faisant toujours vers la même fréquence.

Suivant un mode de réalisation, la charge utile comprend au moins un processeur numérique transparent.

Suivant un mode de réalisation, chaque accès spot utilisateur est associé à une bande de fréquences telle que l'ensemble desdites bandes de fréquence comporte une sous bande de fréquences commune.

Suivant un mode de réalisation, pour un terminal utilisateur mobile donné, chaque accès spot utilisateur est associé à un même canal fréquentiel.

Suivant un mode de réalisation, la charge utile comprend un module de transfert intercellulaire configuré pour analyser la puissance des signaux électromagnétiques provenant de chaque accès spot utilisateur et déterminer quel accès spot utilisateur délivre un signal de plus forte amplitude.

Suivant un mode de réalisation, le module de transfert intercellulaire est configuré pour déclencher un transfert intercellulaire dès que l'amplitude du signal électromagnétique d'un terminal utilisateur mobile est inférieure à une valeur plancher prédéterminée.

Suivant un mode de réalisation, le module de transfert intercellulaire est configuré pour envoyer un message en direction de la station d'ancrage dès que l'amplitude du signal électromagnétique d'un terminal utilisateur mobile est inférieure à une valeur plancher prédéterminée afin que ladite station d'ancrage déclenche un transfert intercellulaire.

Suivant un mode de réalisation, le terminal utilisateur mobile est configuré pour transmettre sa localisation à la station d'ancrage, et dans lequel la charge utile comprend un module de transfert intercellulaire configuré pour déclencher un transfert intercellulaire sur la base d'informations fournie par ladite station d'ancrage.

L'invention a également pour objet un système de télécommunication multifaisceaux comprenant au moins un satellite de télécommunication multifaisceaux tel que décrit précédemment et au moins une station d'ancrage.

L'invention a également pour objet un procédé de transfert intercellulaire apte à être mis en oeuvre par un système de télécommunication multifaisceaux comprenant:
- une étape de routage dynamique des signaux hyperfréquences entre l'accès spot ancrage et l'accès spot utilisateur associés au terminal utilisateur mobile en fonction de la position dudit terminal utilisateur mobile dans les faisceaux formés par le satellite télécommunication multifaisceaux et
- une étape de transposition en fréquence des signaux hyperfréquences provenant des accès spot utilisateur vers la fréquence associé au canal fréquentiel de l'accès spot ancrage et inversement, la transposition des signaux issus des accès spots utilisateur, pour un terminal utilisateur mobile donné se faisant toujours vers la même fréquence

Suivant un mode de mise en oeuvre, le transfert intercellulaire est déclenché par la charge utile du satellite à partir d'information fournie par le module de transfert intercellulaire analysant la puissance des signaux électromagnétiques provenant de chaque accès spot utilisateur pour un terminal utilisateur mobile donné.

Suivant un mode de mise en oeuvre, le transfert intercellulaire est déclenché par la station d'ancrage à partir d'information fournie par le module de transfert intercellulaire analysant la puissance des signaux électromagnétiques provenant de chaque accès spot utilisateur pour un terminal utilisateur mobile donné.

Suivant un mode de mise en oeuvre, le transfert intercellulaire est déclenché par la station d'ancrage à partir d'information fournie par le terminal utilisateur mobile, ledit terminal utilisateur mobile transmettant à la station d'ancrage sa localisation.

L'invention a pour principaux avantages de réduire la bande réservée aux communications mobiles sur la couverture multifaisceaux et de simplifier les procédures de transfert intercellulaire au niveau du terminal mobile.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 illustre la réservation de bande de fréquence coté utilisateur dans un système de télécommunication multifaisceaux connu de l'art antérieur ;
- La figure 2 représente un exemple de système de télécommunication connu de l'art antérieur ;
- La figure 3 illustre un exemple de procédure de transfert intercellulaire dans un exemple de mode de réalisation d'un système de télécommunication multifaisceaux selon l'invention ;
- La figure 4 représente un exemple de réservation de bande de fréquence sur le lien utilisateur dans un exemple de mode de réalisation d'un système de télécommunication multifaisceaux selon l'invention ;
- La figure 5 illustre un exemple de procédure de transfert intercellulaire dans un exemple de mode de réalisation d'un système de télécommunication multifaisceaux selon l'invention ;

Par la suite, on appellera « *lien ancrage* » la liaison hyperfréquence entre une station d'ancrage 21 et un satellite de télécommunication 22, aussi bien pour la liaison montante que pour la liaison descendante. De même, on appellera « *lien utilisateur* » la liaison hyperfréquence entre au moins un terminal utilisateur 23 et un satellite de télécommunication 22, aussi bien pour la liaison montante que pour la liaison descendante.

On désignera par « accès spot » un système antennaire formant un diagramme antenne. Pour le lien ancrage on parlera d'accès spot ancrage 221 et pour le lien utilisateur, d'accès spot utilisateur 222. Les accès spot ancrage 221 et accès spot utilisateur 222 peuvent être des systèmes antennaires confondus ou séparés.

De même, il convient de noter que l'utilisation du terme « terminal » désigne tout type de terminal susceptible d'être utilisé avec le système de télécommunication de l'invention. Il peut s'agir d'un terminal mobile ou fixe.

La présente invention concerne la gestion de la mobilité des terminaux utilisateur dans les systèmes de télécommunication par satellite multifaisceaux.

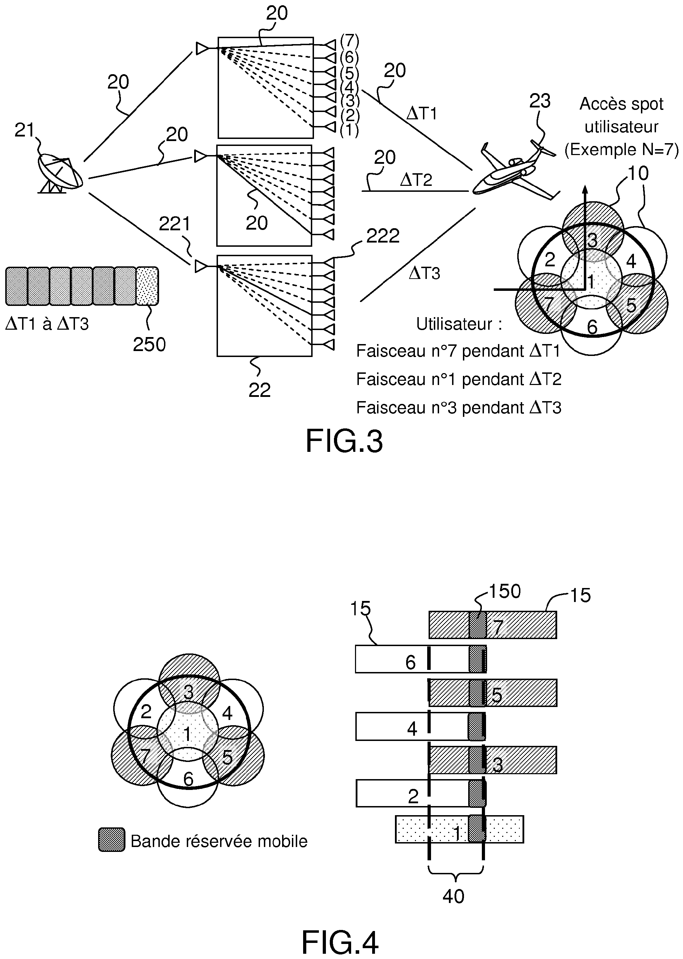

La figure 3 représente un exemple de mode de réalisation d'un système de télécommunication selon l'invention. Le système peut comprendre au moins une station d'ancrage 21 et au moins un satellite de télécommunication 22. Le système est configuré pour permettre à des terminaux utilisateur 23 fixes et/ou mobiles d'échanger des données. L'utilisateur et donc son terminal 23 peut être sur terre, dans une zone de couverture du satellite 22, ou dans les airs comme par exemple à bord d'un aéronef.

Le satellite de télécommunication 22 est un satellite multifaisceaux comprenant une charge utile reconfigurable. La charge utile est configurée pour faire transiter des signaux hyperfréquences entre au moins une station d'ancrage 21 et au moins un terminal utilisateur 23. La charge utile du satellite 22 comprend un ou plusieurs accès spot ancrage 221 et une pluralité d'accès spot utilisateur 222. Chaque accès spot ancrage 221 est configuré pour recevoir et transmettre des signaux hyperfréquences en provenance et à destination d'au moins une station d'ancrage 21. De même, les accès spot utilisateur 222 sont configurés pour recevoir et transmettre des signaux hyperfréquences en provenance et à destination d'au moins un terminal utilisateur 23 en formant des faisceaux (10). Suivant un mode de réalisation, la charge utile peut comprendre au moins un processeur numérique transparent.

Afin d'optimiser la bande passante du plan de fréquence, sur le lien ancrage, un seul canal fréquentiel 250 est réservé pour les échanges de signaux électromagnétiques d'un terminal utilisateur 23 mobile donné. Ce canal peut être changé par planification mais reste constant tout le long d'une communication entre la station d'ancrage et le terminal utilisateur. Quelle que soit la positon du terminal utilisateur 23 mobile dans les faisceaux 10 formés par le satellite 22, la liaison entre le satellite et la station d'ancrage 21 se fera toujours à travers ce canal fréquentiel 250 unique. Les accès spot utilisateur 222 sont, quant à eux, chacun associés à un canal fréquentiel 150, de fréquence identique ou différente, pour la liaison entre le satellite 22 et le terminal utilisateur mobile 23.

Lorsque l'utilisateur du terminal mobile se déplace et passe d'un faisceau 10 à un autre, son signal électromagnétique commute sur un accès spot utilisateur 222 différent, et doit être routé vers l'accès spot ancrage 221 associé à la communication dudit utilisateur du terminal mobile. A cet effet, la charge utile peut comprendre des routes reconfigurables entre chaque accès spot ancrage 221 et les accès spot utilisateur 222 ainsi qu'un module de routage dynamique configuré pour router l'accès spot utilisateur 222 associé au faisceau 10 dans lequel se trouve le terminal utilisateur 23 mobile à l'accès spot ancrage 221 associé à la station d'ancrage et inversement. Ce module effectue le routage de façon dynamique en fonction de l'évolution de la position du terminal utilisateur 23 mobile dans les faisceaux 10 de la couverture du satellite de communication 22. Ainsi, contrairement au cas décrit précédemment, la configuration des routes 20 entre le terminal utilisateur 23 mobile et la station d'ancrage associée n'est plus fixe mais est reconfigurée de façon dynamique en fonction du déplacement du terminal mobile à l'intérieur des faisceaux 10. La reconfiguration du routage peut être déclenchée, par exemple, à l'aide d'un algorithme stocké sur une zone mémoire de la charge utile.

La charge utile peut également comprendre un module de transposition configuré pour translater en fréquence les signaux hyperfréquences provenant des accès spot utilisateur 222 vers la fréquence associé au canal fréquentiel 250 de l'accès spot ancrage 221 et inversement. Le canal fréquentiel associé à l'accès spot ancrage 221, pour un terminal utilisateur 23 mobile donné, étant le même quel que soit la position dudit terminal 23, la transposition en fréquence des signaux issus des accès spots utilisateur 222 s'effectue toujours vers la même fréquence. La transposition en fréquence des signaux peut s'effectuer, par exemple, à l'aide d'un algorithme stocké sur une zone mémoire de la charge utile.

La figure 3 illustre également, par un exemple, le processus de transfert intercellulaire dans le cas particulier d'un système de télécommunication à sept faisceaux 10 et un plan de fréquence à trois couleurs. Bien entendu cet exemple n'est nullement limitatif et peut être étendu à un cas plus général à N faisceaux et M couleurs avec M et N des entiers non nuls.

On suppose que pendant l'intervalle de temps ΔT1, le terminal utilisateur 23 mobile se trouve dans le faisceau n°7. Les signaux électromagnétiques des communications entre le terminal utilisateur 23 et la station d'ancrage 21 transitent par une « route » 20 reliant l'accès spot ancrage et l'accès spot utilisateur n°7.

Lorsqu'au début de l'intervalle de temps ΔT2, le terminal utilisateur 23 mobile sort du faisceau n°7 et entre dans le faisceau n°1, le module de routage reconfigure automatiquement la route 20 de sorte qu'elle relie l'accès spot utilisateur n°1 à l'accès spot ancrage 221. De même le module de transposition peut être reconfiguré afin de translater les signaux électromagnétique issus de la station d'ancrage 21 vers la fréquence du nouveau canal fréquentiel 150 associé à l'accès spot utilisateur n°1 et inversement.

Le même processus se reproduira entre l'intervalle de temps ΔT2 et l'intervalle de temps ΔT3 lorsque le terminal mobile 23 passera du faisceau n°1 au faisceau n°3.

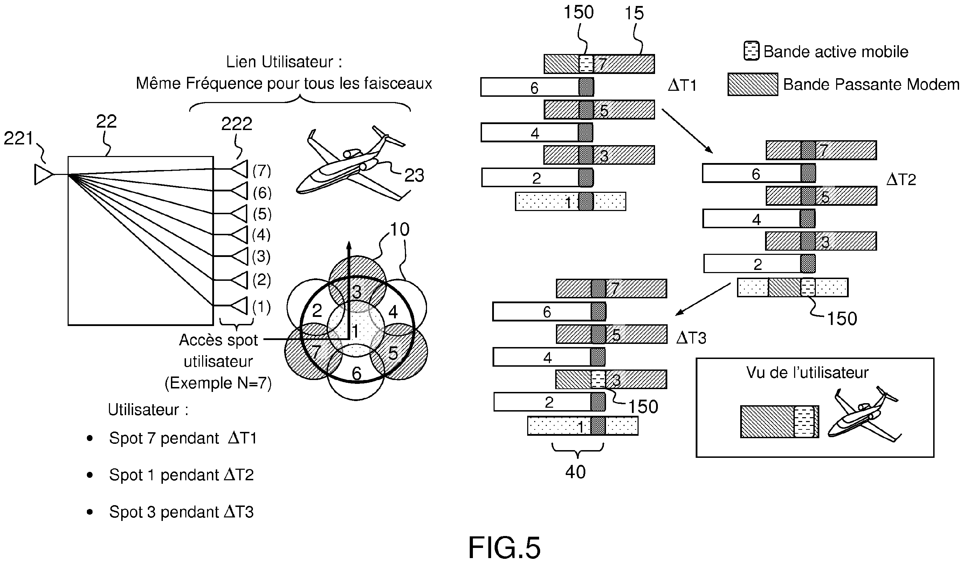

Suivant un mode de réalisation illustré aux figures 4 et 5, afin d'optimiser le plan de fréquence sur le lien utilisateur, les bandes de fréquences 15, dudit plan de fréquence, peuvent être choisies de sorte que chacune de ces bandes de fréquences se recouvre et présente une sous bande de fréquences communes 40. Un tel plan de fréquence est illustré figure 4 à travers un exemple à trois couleurs avec recouvrement. Les canaux fréquentiels 250 associés aux terminaux utilisateurs 23 mobiles sont choisis à l'intérieur de cette sous-bande de fréquences commune 40. Ainsi, pour un terminal utilisateur 23 mobile donné, chaque accès spot utilisateur 222 est associé à un même canal fréquentiel 250 unique. De façon avantageuse, lorsqu'un terminal utilisateur 23 mobile se déplace à travers les faisceaux 10 du satellite 22, il n'est plus besoin d'effectuer un saut de porteuse à chaque fois que le terminal passe d'un faisceau à un autre. Le terminal utilisateur 23 mobile conserve sa porteuse à la même fréquence quel que soit le faisceau 10 dans lequel il se trouve. Ceci permet de simplifier le processus de transfert intercellulaire. De plus, comme les canaux fréquentiels 250 associés à chaque accès spot utilisateur 222 sont identiques, le système de télécommunication n'est plus obligé de réserver autant de canaux fréquentiels 250 que d'accès spot utilisateur 222.

Suivant un mode de réalisation, la charge utile du satellite de télécommunication peut comprendre un module de transfert intercellulaire. Ce module est destiné à gérer les déplacements des terminaux utilisateur 23 mobiles à travers les différents faisceaux 10 formés par le satellite 22. Le module de transfert intercellulaire peut effectuer les transferts intercellulaires à l'aide d'un algorithme stocké sur une zone mémoire de la charge utile. Il peut, par exemple, détecter l'instant où le terminal 23 mobile change de faisceau et vers quel faisceau 10 il se dirige. Pour ce faire le module de transfert intercellulaire peut être configuré pour analyser la puissance des signaux électromagnétiques provenant de chaque accès spot utilisateur 222.

Suivant une variante de réalisation, la décision de transfertintercellulaire peut être basée sur des informations externes à la charge utile, transmises, par exemple par les terminaux utilisateurs 23 mobiles, recueillies et transférées par la station d'ancrage.

Le module peut, par exemple, localiser un terminal utilisateur 23 mobile en relevant la puissance des signaux électromagnétiques sur chaque accès spot utilisateur 222 et en recherchant sur quel accès spot utilisateur le signal à la fréquence associée au terminal 23 considéré a l'amplitude la plus élevée.

Le module de transfert intercellulaire peut détecter le passage d'un terminal mobile 23 d'un faisceau 10 à un autre, par exemple, en détectant une diminution de l'amplitude du signal électromagnétique d'un terminal utilisateur 23 mobile. Il peut en même temps détecter vers quel faisceau 10 le terminal 23 mobile se dirige en détectant une augmentation de l'amplitude d'un signal électromagnétique sur un autre accès spot utilisateur 222. Lorsque le signal de l'accès spot 222 où se trouvait le terminal utilisateur 23 mobile devient inférieur à une valeur plancher prédéterminée, le module de transfert peut considérer que le terminal est sortie du faisceau.

Suivant un autre mode de mise en oeuvre, lorsque le module de transfert intercellulaire surveille l'amplitude des signaux électromagnétiques issus des accès spots utilisateur 222, s'il détecte une hausse de l'amplitude d'un signal sur un accès spot utilisateur autre que celui associé au faisceau 10 dans lequel se trouve le terminal utilisateur 23 mobile, le module de transfert intercellulaire peut se préparer à effectuer un transfert intercellulaire vers un autre faisceau et dès que l'amplitude du signal atteint une valeur seuil prédéterminée, il effectue ledit transfert. Le transfert peut s'effectuer, par exemple, lorsque l'amplitude du signal électromagnétique sur l'accès spot utilisateur 222 autre que celui associé au faisceau où se trouve le terminal utilisateur 23 mobile considéré devient sensiblement égale à l'amplitude du signal sur l'accès spot utilisateur 222 associé au faisceau où se trouve le terminal utilisateur 23 mobile considéré.

Suivant un mode de mise en oeuvre du transfert intercellulaire, lorsque le module de transfert intercellulaire détecte le passage d'un terminal utilisateur mobile d'un faisceau à un autre, il peut émettre un message en direction de la station d'ancrage 21 pour que cette dernière déclenche le processus de transfert intercellulaire. Le message peut par exemple indiquer à la station d'ancrage 21 quel terminal change de faisceau, l'ancien faisceau et le nouveau faisceau dans lequel il se trouve. La station d'ancrage 21 peut ainsi informer entre autre les modules de routage et de transposition de sorte que le module de routage reconfigure la route 20 entre l'accès spot ancrage 221 et le nouvel accès spot utilisateur 222 et que le module de transposition modifie son algorithme afin de transposer les signaux électromagnétiques du terminal utilisateur 23 mobile considéré vers la nouvelle fréquence.

Suivant une variante de réalisation, le transfert intercellulaire peut être déclenché par la charge utile, sur la base d'informations externes à la charge utile, par exemple, une localisation fournie par le terminal à la station d'ancrage. A cet effet, le terminal utilisateur 23 mobile peut être configuré pour transmettre sa localisation à la station d'ancrage. Dès que la station ancrage détecte que le terminal utilisateur 23 mobile sort de la couverture du faisceau 10, ladite station ancrage envoie un message au module de transfert intercellulaire de la charge utile afin que ce dernier déclenche un transfert intercellulaire.

Dans les différents modes de mise en oeuvre présentés, le module de transfert intercellulaire peut effectuer les transferts intercellulaires à l'aide d'un algorithme stocké sur une zone mémoire de la charge utile.

Suivant un autre mode de mise en oeuvre, la charge utile peut être quasi autonome. Dans ce cas, c'est le module de transfert qui déclenche le processus de transfert intercellulaire, sans intervention externe à la charge utile ni information transmise par la station d'ancrage ou le terminal utilisateur 23 mobile. Le module de transfert informe les différents modules de la charge utile du changement de faisceau 10.

Ainsi, les transferts intercellulaires peuvent être réalisés directement par la charge utile, par exemple par un module de transfert intercellulaire, ou indirectement, par exemple par la station d'ancrage 21. Dans les deux cas, le transfert intercellulaire peut être effectué à l'aide d'informations fournies par la charge utile par exemple via le module de transfert intercellulaire. Ces informations peuvent être par exemple la position du terminal utilisateur 23 mobile dans les faisceaux 10, la puissance du signal dans chaque accès spot utilisateur 222, le passage d'un terminal utilisateur 23 mobile d'un faisceau 10 à un autre ou toute autre information nécessaire au transfert intercellulaire.

Les différents modules décrits précédemment peuvent être un ou plusieurs microprocesseurs, processeurs, ordinateurs ou tous autres moyens équivalents programmés de façon opportune.

## Revendications

1. Satellite de télécommunication (22) multifaisceaux comprenant une charge utile reconfigurable, au moins un accès spot ancrage (221) et une pluralité d'accès spot utilisateur (222), ladite charge utile étant configurée pour transmettre des signaux hyperfréquences entre au moins une station d'ancrage (21) et au moins un terminal utilisateur (23) via ledit accès spot ancrage (221) et lesdits accès spots utilisateurs (222), ledit accès spot ancrage (221) étant apte à recevoir et/ou à transmettre des signaux hyperfréquences en provenance et/ou à destination d'au moins une station d'ancrage (21), lesdits accès spot utilisateur (222) étant aptes à recevoir et/ou transmettre des signaux hyperfréquences en provenance et/ou à destination d'au moins un terminal utilisateur (23) en formant des faisceaux (10),
ledit satellite (22) étant **caractérisé en ce que**, pour un terminal utilisateur (23) mobile donné, ledit accès spot ancrage (221) est associé à un canal fréquentiel (250) unique pour la liaison entre le satellite (22) et une station d'ancrage (21) et lesdits accès spot utilisateur (222) sont chacun associés à un canal fréquentiel (150) pour la liaison entre le satellite (22) et ledit terminal utilisateur (23) mobile,
et **en ce que**, la charge utile comprend au moins un module de routage configuré pour router de façon dynamique, l'accès spot utilisateur (222) associé au faisceau (10) dans lequel se trouve ledit terminal utilisateur (23) mobile à l'accès spot ancrage (221) associé à la station d'ancrage (21) et inversement en fonction de la position du terminal utilisateur (23) mobile et un module de transposition configuré pour transposer en fréquence les signaux hyperfréquences provenant des accès spot utilisateur (222) vers la fréquence associé au canal fréquentiel (250) de l'accès spot ancrage (221) et inversement, la transposition des signaux issus des accès spots utilisateur (222), pour un terminal utilisateur (23) mobile donné se faisant toujours vers la même fréquence.

2. Satellite selon la revendication précédente dans lequel la charge utile comprend au moins un processeur numérique transparent.

3. Satellite selon une des revendications précédentes dans lequel chaque accès spot utilisateur (222) est associé à une bande de fréquences (15) telle que l'ensemble desdites bandes de fréquence (15) comporte une sous bande de fréquences (40) commune.

4. Satellite selon la revendication précédente dans lequel, pour un terminal utilisateur (23) mobile donné, chaque accès spot utilisateur (222) est associé à un même canal fréquentiel (150).

5. Satellite selon la revendication précédente dans lequel la charge utile comprend un module de transfert intercellulaire configuré pour analyser la puissance des signaux électromagnétiques provenant de chaque accès spot utilisateur (222) et déterminer quel accès spot utilisateur (222) délivre un signal de plus forte amplitude.

6. Satellite selon la revendication 5 dans lequel le module de transfert intercellulaire est configuré pour déclencher un transfert intercellulaire dès que l'amplitude du signal électromagnétique d'un terminal utilisateur (23) mobile est inférieure à une valeur plancher prédéterminée.

7. Satellite selon la revendication 5 dans lequel le module de transfert intercellulaire est configuré pour envoyer un message en direction de la station d'ancrage (21) dès que l'amplitude du signal électromagnétique d'un terminal utilisateur (23) mobile est inférieure à une valeur plancher prédéterminée afin que ladite station d'ancrage (21) déclenche un transfert intercellulaire.

8. Satellite selon une des revendications 1 à 4 dans lequel le terminal utilisateur (23) mobile est configuré pour transmettre sa localisation à la station d'ancrage (21), et dans lequel la charge utile comprend un module de transfert intercellulaire configuré pour déclencher un transfert intercellulaire sur la base d'informations fournie par ladite station d'ancrage (21).

9. Système de télécommunication multifaisceaux **caractérisé en ce qu'**il comprend au moins un satellite de télécommunication (22) multifaisceaux selon une des revendications précédentes et au moins une station d'ancrage (21).

10. Procédé de transfert intercellulaire de la liaison entre un terminal utilisateur (23) mobile donné et une station d'ancrage (21) via un satellite de télécommunication multifaisceaux selon l'une quelconque des revendications 1 à 8, ledit procédé étant mis en oeuvre par la charge utile dudit satellite de télécommunication multifaisceaux pour router un accès spot d'encrage (221) dudit satellite à l'accès spot utilisateur (222) associé au faisceau (10) donné dudit satellite, dans lequel se situe le terminal utilisateur mobile (23), **caractérisé en ce qu'**il comporte :
une étape de transposition en fréquence des signaux hyperfréquences provenant de l'accès spot utilisateur (222) considéré vers la fréquence associé au canal fréquentiel (250) de l'accès spot ancrage (221) dédié aux accès spots utilisateurs du satellite pour le terminal utilisateur (23) mobile considéré et inversement;
une étape de routage dynamique, pour relier l'accès spot utilisateur (222) mobile, associé au faisceau (10) considéré, à l'accès spot ancrage (221) associé à la station d'ancrage (21);
la transposition des signaux issus des accès spots utilisateur (222), pour un terminal utilisateur (23) mobile donné se faisant toujours vers la même fréquence.

11. Procédé selon la revendication précédente **caractérisé en ce que**, le satellite comportant un module de transfert intercellulaire, configuré pour analyser la puissance des signaux électromagnétiques provenant de chaque spot utilisateur (222) pour un terminal utilisateur (23) mobile donné et déterminer quel spot utilisateur (222) délivre un signal de plus forte amplitude, le transfert intercellulaire est déclenché par la charge utile du satellite (22) à partir d'informations fournies par ledit module de transfert intercellulaire.

12. Procédé selon la revendication 10 **caractérisé en ce que**, le satellite comportant un module de transfert intercellulaire, configuré pour analyser la puissance des signaux électromagnétiques provenant de chaque spot utilisateur (222) pour un terminal utilisateur (23) mobile donné et déterminer quel spot utilisateur (222) délivre un signal de plus forte amplitude, le transfert intercellulaire est déclenché par la station d'ancrage (21) à partir d'informations fournies par ledit module de transfert intercellulaire.

13. Procédé selon la revendication 10 **caractérisé en ce que** le transfert intercellulaire est déclenché par la station d'ancrage (21) associée au satellite, à partir d'informations fournies par le terminal utilisateur (23) mobile, ledit terminal utilisateur (23) mobile transmettant à la station d'ancrage (21) sa localisation.

## Patentansprüche

1. Mehrstrahl-Telekommunikationssatellit (22), der eine umkonfigurierbare Nutzlast, wenigstens einen Gateway Zugangspunkt (221) und mehrere Benutzerzugangspunkte (222) umfasst, wobei die Nutzlast zum Senden von Mikrowellensignalen zwischen wenigstens einer Gateway Station (21) und wenigstens einem Benutzerendgerät (23) über den Gateway Zugangspunkt (221) und die Benutzerzugangspunkte (222) konfiguriert ist, wobei der Gateway Zugangspunkt (221) zum Empfangen und/oder zum Senden von Mikrowellensignalen geeignet ist, die von wenigstens einer Gateway Station (21) kommen und/oder dorthin gerichtet sind, wobei die Benutzerzugangspunkte (222) Mikrowellensignale empfangen und/oder senden können, die von wenigstens einem Benutzerendgerät (23) kommen und/oder dorthin gerichtet sind, unter Bildung von Strahlen (10),
wobei der Satellit (22) **dadurch gekennzeichnet ist, dass** für jedes gegebene mobile Benutzerendgerät (23) der Gateway Zugangspunkt (221) mit einem einzigen Frequenzkanal (250) für die Verbindung zwischen dem Satelliten (22) und einer Gateway Station (21) assoziiert ist und die Benutzerzugangspunkte (222) jeweils mit einem Frequenzkanal (150) für die Verbindung zwischen dem Satelliten (22) und dem mobilen Benutzerterminal (23) assoziiert sind,
und dadurch, dass die Nutzlast wenigstens ein Routing-Modul umfasst, konfiguriert zum Routen, auf dynamische Weise, des mit dem Strahl (10) assoziierten Benutzerzugangspunkts (222), in dem sich das mobile Benutzerterminal (23) befindet, zu dem mit der Gateway Station (21) assoziierten Gateway Zugangspunkt (221) und umgekehrt in Abhängigkeit von der Position des mobilen Benutzerterminals (23), und ein Umsetzungsmodul, konfiguriert zum Frequenzumsetzen der von den Benutzerzugangspunkt (222) kommenden Mikrowellensignale in die mit dem Frequenzkanal (250) des Gateway Zugangspunkt (221) assoziierte Frequenz und umgekehrt, wobei die Umsetzung der vom Benutzerzugangspunkt (222) ausgegebenen Signale, für ein gegebenes mobiles Benutzerendgerät (23), immer in dieselbe Frequenz erfolgt.

2. Satellit nach dem vorherigen Anspruch, bei dem die Nutzlast wenigstens einen transparenten digitalen Prozessor umfasst.

3. Satellit nach einem der vorherigen Ansprüche, bei dem jeder Benutzerzugangspunkt (222) mit einem Frequenzband (15) assoziiert ist, so dass die Gesamtheit der Frequenzbänder (15) ein gemeinsames Frequenzteilband (40) umfasst.

4. Satellit nach dem vorherigen Anspruch, bei dem für ein gegebenes mobiles Benutzerterminal (23) jeder Benutzerzugangspunkt (222) mit einem selben Frequenzkanal (150) assoziiert ist.

5. Satellit nach dem vorherigen Anspruch, bei dem die Nutzlast ein interzelluläres Übertragungsmodul umfasst, konfiguriert zum Analysieren der Leistung der von jedem Benutzerzugangspunkt (222) kommenden elektromagnetischen Signale und zum Bestimmen, welcher Benutzerzugangspunkt (222) ein Signal mit der größten Amplitude liefert.

6. Satellit nach Anspruch 5, bei dem das interzelluläre Übertragungsmodul zum Auslösen einer interzellulären Übertragung konfiguriert ist, sobald die Amplitude des elektromagnetischen Signals eines mobilen Benutzerterminals (23) kleiner ist als ein vorbestimmter Untergrenzwert.

7. Satellit nach Anspruch 5, bei dem das interzelluläre Übertragungsmodul zum Senden einer Nachricht in Richtung der Gateway Station (21) konfiguriert ist, sobald die Amplitude des elektromagnetischen Signals eines mobilen Benutzerterminals (23) kleiner ist als ein vorbestimmter Untergrenzwert, damit die Gateway Station (21) eine interzelluläre Übertragung auslöst.

8. Satellit nach einem der Ansprüche 1 bis 4, bei dem das mobile Benutzerterminal (23) zum Senden seines Standorts zu der Gateway Station (21) konfiguriert ist und bei dem die Nutzlast ein interzelluläres Übertragungsmodul umfasst, konfiguriert zum Auslösen einer interzellulären Übertragung auf der Basis von von der Gateway Station (21) gelieferten Informationen.

9. Mehrstrahl-Telekommunikationssystem, **dadurch gekennzeichnet, dass** es wenigstens einen Mehrstrahl-Telekommunikationssatelliten (22) nach einem der vorherigen Ansprüche und wenigstens eine Gateway Station (21) umfasst.

10. Interzelluläres Übertragungsverfahren der Verbindung zwischen einem gegebenen mobilen Benutzerterminal (23) und einer Gateway Station (21) über einen Mehrstrahl-Telekommunikationssatelliten nach einem der Ansprüche 1 bis 8, wobei das Verfahren durch die Nutzlast des Mehrstrahl-Telekommunikationssatelliten zum Routen eines Gateway Zugangspunkts (221) des Satelliten zu dem mit dem gegebenen Strahl (10) des Satelliten assoziierten Benutzerzugangspunkt (222) durchgeführt wird, in dem sich das mobile Benutzerterminal (23) befindet, **dadurch gekennzeichnet, dass** es Folgendes beinhaltet:
einen Schritt des Frequenzumsetzens der von dem betrachteten Benutzerzugangspunkt (222) kommenden Mikrowellensignale in die mit dem Frequenzkanal (250) assoziierte Frequenz des Gateway Zugangspunkts (221), dediziert für die Benutzerzugangspunkte des Satelliten für das betrachtete mobile Benutzerendgerät (23), und umgekehrt:
einen Schritt des dynamischen Routens, zum Verbinden des mit dem betrachteten Strahl (10) assoziierten mobilen Benutzerzugangspunkt (222) zu dem mit der Gateway Station (21) assoziierten Gateway Zugangspunkt (221);
wobei das Umsetzen von von den Benutzerzugangspunkt (222) ausgegebenen Signalen, für ein gegebenes mobiles Benutzerterminal (23), immer in dieselbe Frequenz erfolgt.

11. Verfahren nach dem vorherigen Anspruch, **dadurch gekennzeichnet, dass**, da der Satellit ein interzelluläres Übertragungsmodul umfasst, konfiguriert zum Analysieren der Leistung der von jedem Benutzerpunkt (222) kommenden elektromagnetischen Signale für ein gegebenes mobiles Benutzerterminal (23) und zum Bestimmen, welcher Benutzerpunkt (222) ein Signal mit der größten Amplitude liefert, die interzelluläre Übertragung durch die Nutzlast des Satelliten (22) auf der Basis von von dem interzellulären Übertragungsmodul gelieferten Informationen ausgelöst wird.

12. Verfahren nach Anspruch 10, **dadurch gekennzeichnet, dass**, da der Satellit ein interzelluläres Übertragungsmodul umfasst, konfiguriert zum Analysieren der Leistung der von jedem Benutzerpunkt (222) kommenden elektromagnetischen Signale für ein gegebenes mobiles Benutzerterminal (23) und zum Bestimmen, welcher Benutzerpunkt (222) ein Signal mit der größten Amplitude liefert, die interzelluläre Übertragung durch die Gateway Station (21) auf der Basis von von dem interzellulären Übertragungsmodul gelieferten Informationen ausgelöst wird.

13. Verfahren nach Anspruch 10, **dadurch gekennzeichnet, dass** die interzelluläre Übertragung durch die mit dem Satelliten assoziierte Gateway Station (21) auf der Basis von von dem mobilen Benutzerterminal (23) gelieferten Informationen ausgelöst wird, wobei das mobile Benutzerterminal (23) seinen Standort zur Gateway Station (21) sendet.

## Claims

1. A multi-beam telecommunications satellite (22) comprising a reconfigurable payload, at least one gateway spot port (221) and a plurality of user spot ports (222), said payload being configured to transmit microwave signals between at least one gateway station (21) and at least one user terminal (23) via said gateway spot port (221) and said user spot ports (222), said gateway spot port (221) being capable of receiving and/or transmitting microwave signals from and/or to at least one gateway station (21), said user spot ports (222) being capable of receiving and/or transmitting microwave signals from and/or to at least one user terminal (23) by forming beams (10),
said satellite (22) being **characterised in that**, for a given mobile user terminal (23), said gateway spot port (221) is associated with a single frequency channel (250) for the link between the satellite (22) and a gateway station (21) and said user spot gateway ports (222) are each associated with a frequency channel (150) for the link between the satellite (22) and said mobile user terminal (23),
and **in that** the payload comprises at least one routing module configured to dynamically route the user spot port (222) associated with the beam (10) in which said mobile user terminal (23) is located to the gateway spot port (221) associated with the gateway station (21), and vice versa, as a function of the position of the mobile user terminal (23) and a transposition module configured to frequency transpose the microwave signals originating from the user spot ports (222) to the frequency associated with the frequency channel (250) of the gateway spot port (221), and vice versa, the transposition of the signals originating from the user spot ports (222) for a given mobile user terminal (23) always occurring towards the same frequency.

2. The satellite as claimed in the preceding claim, wherein the payload comprises at least one transparent digital processor.

3. The satellite as claimed in any one of the preceding claims, wherein each user spot port (222) is associated with a frequency band (15), such that all said frequency bands (15) comprise a common frequency sub-band (40).

4. The satellite as claimed in the preceding claim, wherein, for a given mobile user terminal (23), each user spot port (222) is associated with the same frequency channel (150).

5. The satellite as claimed in the preceding claim, wherein the payload comprises a handover module configured to analyse the power of the electromagnetic signals originating from each user spot port (222) and to determine which user spot port (222) delivers a signal with the greatest amplitude.

6. The satellite as claimed in claim 5, wherein the handover module is configured to trigger a handover as soon as the amplitude of the electromagnetic signal of a mobile user terminal (23) is less than a predetermined threshold value.

7. The satellite as claimed in claim 5, wherein the handover module is configured to send a message to the gateway station (21) as soon as the amplitude of the electromagnetic signal of a mobile user terminal (23) is less than a predetermined threshold value, so that said gateway station (21) triggers a handover.

8. The satellite as claimed in any one of claims 1 to 4, wherein the mobile user terminal (23) is configured to transmit its location to the gateway station (21) and wherein the payload comprises a handover module configured to trigger a handover on the basis of information provided by said gateway station (21).

9. A multi-beam telecommunication system, **characterised in that** it comprises at least one multi-beam telecommunications satellite (22) as claimed in any one of the preceding claims and at least one gateway station (21).

10. A method for handing over the link between a given mobile user terminal (23) and a gateway station (21) via a multi-beam telecommunications satellite as claimed in any one of claims 1 to 8, said method being implemented by the payload of said multi-beam telecommunications satellite to route a gateway spot port (221) of said satellite to the user spot port (222) associated with the given beam (10) of said satellite, in which the mobile user terminal (23) is located, **characterised in that** comprises:
a step of frequency transposing microwave signals originating from the considered user spot port (222) to the frequency associated with the frequency channel (250) of the gateway spot port (221) dedicated to the user spot ports of the satellite for the considered mobile user terminal (23), and vice versa;
a step of dynamic routing for linking the mobile user spot port (222) associated with the considered beam (10) to the gateway spot port (221) associated with the gateway station (21);
the transposition of the signals originating from the user spot ports (222) for a given mobile user terminal (23) always occurring towards the same frequency.

11. The method as claimed in the preceding claim, **characterised in that**, with the satellite comprising a handover module configured to analyse the power of the electromagnetic signals originating from each user spot (222) for a given mobile user terminal (23) and to determine which user spot (222) delivers a signal with the greatest amplitude, the handover is triggered by the payload of the satellite (22) on the basis of information provided by said handover module.

12. The method as claimed in claim 10, **characterised in that**, with the satellite comprising a handover module configured to analyse the power of the electromagnetic signals originating from each user spot (222) for a given mobile user terminal (23) and to determine which user spot (222) delivers a signal with the greatest amplitude, the handover is triggered by the gateway station (21) on the basis of information provided by said handover module.

13. The method as claimed in claim 10, **characterised in that** the handover is triggered by the gateway station (21) associated with the satellite on the basis of information provided by the mobile user terminal (23), said mobile user terminal (23) transmitting its location to the gateway station (21).
